# FASCICULE DE BREVET EUROPEEN

(11) **EP 1 118 787 B1**
(45) Date de publication et mention de la délivrance du brevet: **17.03.2004**
(21) Numéro de dépôt: 01400149.9
(22) Date de dépôt: 19.01.2001
(51) Int. Cl.: F16D 23/06

(54) **Dispositif de couplage par cône de friction pour boîte de vitesses**
Getriebekupplungsvorrichtung mit Synchronring
Gearbox coupling device with synchro ring

(30) Priorité: 21.01.2000 FR 0000755
(43) Date de publication de la demande: 25.07.2001
(73) Titulaire: Renault s.a.s., 92100 Boulogne Billancourt (FR)
(72) Inventeur: Losq, Robert, 78310 Maurepas (FR); Raoul, Michel, 78990 Elancourt (FR)

(56) Documents cités:
- WO-A-91/17373
- DE-A- 1 910 884
- DE-B- 1 284 309
- FR-A- 2 742 501
- JP-A- 4 000 020

## Description

La présente invention se rapporte aux synchroniseurs de boîtes de vitesses mécaniques.

Plus précisément, elle concerne un dispositif de couplage d'un pignon fou avec un arbre de boîte de vitesses comportant un moyeu fixé sur ledit arbre, un baladeur libre en rotation sur le moyeu, des moyens de couplage disposés entre le baladeur et le pignon, propres à égaliser par frottement les vitesses de l'arbre et du pignon et à transformer le mouvement de rotation reçu du moyeu en poussée axiale sur le pignon de façon à transmettre eux-mêmes par friction le couple entre le moyeu et le pignon

Les synchroniseurs équipant les boîtes de vitesses mécaniques présentent généralement des cônes de friction assurant l'égalisation par frottement, des vitesses d'un arbre de la boîte et d'un pignon fou.

Selon une disposition habituelle dans ce domaine, les synchroniseurs comportent un manchon-baladeur, se déplaçant sous la commande d'une fourchette le long d'un moyeu claveté sur un arbre de la boîte. Ce baladeur est muni de dents venant craboter la denture d'un pignon fou après avoir traversé celle d'un anneau de synchronisation.

Par la publication FR 2764 956, on connaît un synchroniseur de type particulier, dit à « cônes de frottement auto-bloquants », où le baladeur ne présente pas de dentures de crabotage, mais où les anneaux de synchronisation transforment le mouvement de rotation reçu du moyeu en poussée axiale contre un pignon, de façon à transmettre eux-mêmes le couple moteur entre le moyeu et le pignon, en exerçant sur celui-ci une pression constante.

Une telle disposition permet notamment de réduire la longueur totale réservée, sur l'arbre primaire de la boîte, au déplacement des baladeurs , et de supprimer les « croquements » dans la commande de passage des vitesses, qui sont très critiqués par les utilisateurs.

Toutefois le synchroniseur décrit dans cette publication conserve un encombrement relativement important dès lors que les surfaces de frottement sont dimensionnées pour faire passer des couples élevés.

La présente invention vise à augmenter la capacité en couple d'un synchroniseur à baladeur dans lequel les moyens de synchronisation transforment le mouvement de rotation reçu du moyeu en poussée axiale sur le pignon de façon à transmettre eux-mêmes par friction le couple entre le moyeu et le pignon

Dans ce but, elle propose que les moyens de couplage disposés entre le baladeur et le pignon soient constitués par un ensemble de synchronisation multi-cônes dont l'anneau inférieur est solidaire en rotation du moyeu, et dont l'anneau supérieur est solidaire en rotation du pignon.

Pour améliorer les performances d'un tel dispositif de couplage, et diminuer notamment les dissipations d'énergie par frottement entre les cônes de synchronisation non sollicités (qui ont une incidence non négligeable sur le « couple de traînée » global de la transmission), l'invention prévoit également que les anneaux inférieur et supérieur soient repoussés mutuellement par une rondelle élastique formant ressort.

De préférence, les rampes du moyeu sont inclinées par rapport à l'axe de l'arbre de manière à pouvoir exercer une poussée axiale sur les rampes de l'élément de synchronisation lorsque celui-ci est lié en rotation au pignon.

D'autres caractéristiques et avantages de l'invention apparaîtront à la lecture de la description détaillée qui suit, pour la compréhension de laquelle on se reportera aux dessins annexés dans lesquels :
- la figure 1 est une coupe axiale du dispositif de synchronisation et de couplage en position repos ;
- la figure 1A est une coupe selon A-A de la figure 1 ;

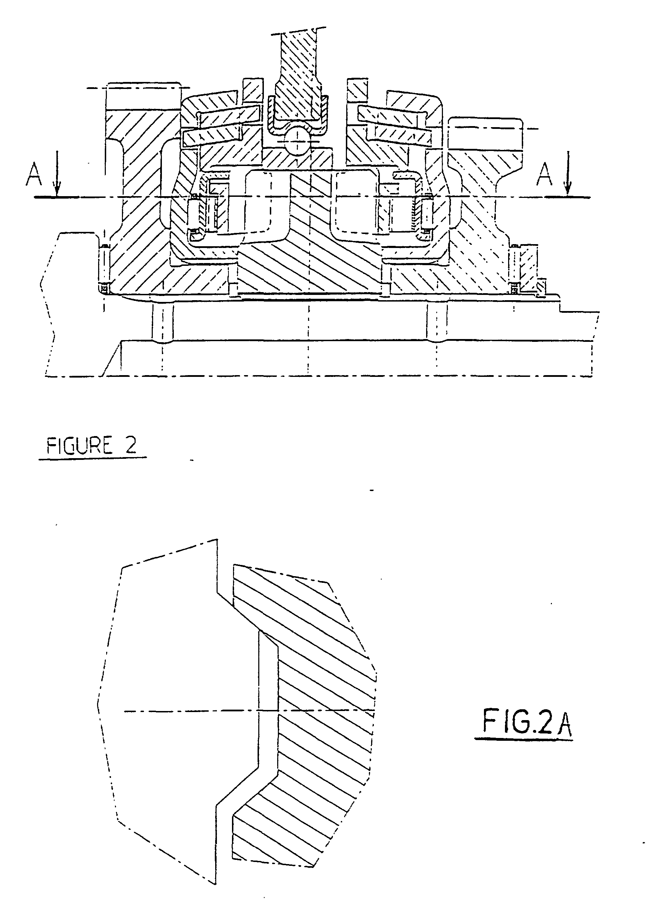

- la figure 2 est une coupe axiale du dispositif de synchronisation et de couplage en position accouplée ;
- la figure 2A est une coupe selon A-A de la figure 2.

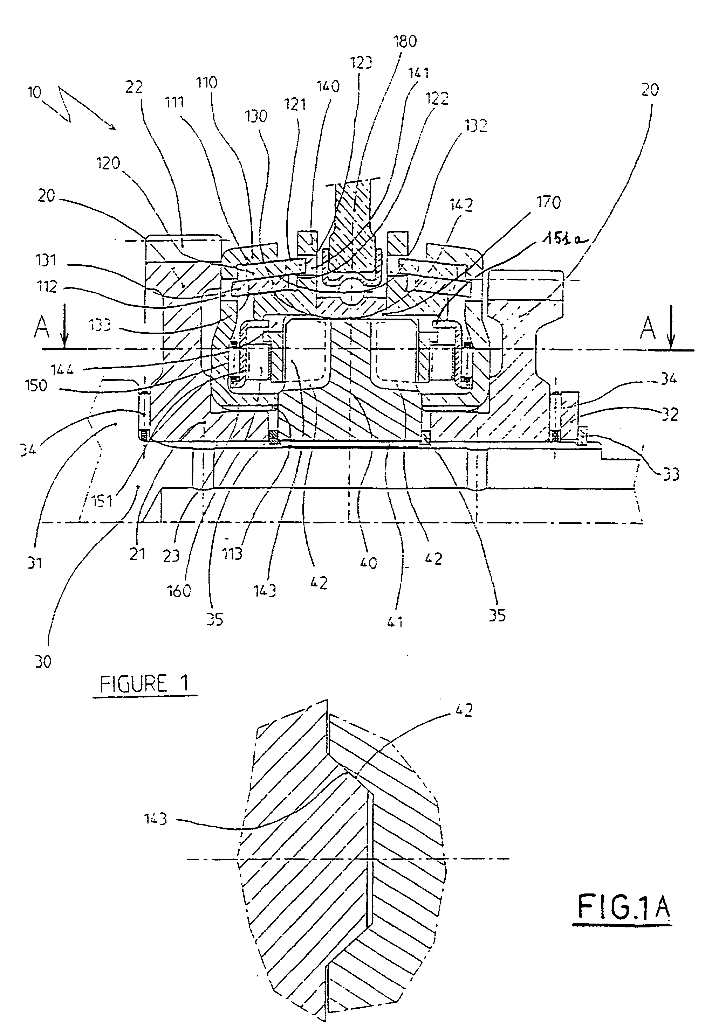

On voit sur la figure 1 l'ensemble d'un dispositif 10 pour la synchronisation et le couplage en rotation d'un pignon fou 20 à rotation sur un arbre 30 d'une boîtes de vitesses de véhicule automobile ( non représentée).

Dans la description qui va suivre, le dispositif 10 présente une symétrie de conception par rapport à un plan vertical médian qui permet la synchronisation et le couplage d'un deuxième pignon fou 20. Il ne sera par conséquent décrit que la partie du dispositif permettant la synchronisation et le couplage du pignon fou situé à gauche.

Conventionnellement, en ce qui concerne la partie du dispositif qui est décrite en référence à la partie gauche de la figure 1, l'arbre 30 comporte un épaulement 31 qui forme une butée axiale pour le pignon fou. Entre cet épaulement et le pignon fou, est intercalée une butée à aiguilles 34. Par symétrie, le dispositif 10 possède une deuxième moyen d'arrêt axial qui est constitué par exemple d'une butée à aiguilles 34, d'une rondelle d'appui 32 et d'un jonc d'arrêt 33.

De manière connue, le moyeu fixe 40 est entraîné en rotation par l'arbre 30 de la boîte de vitesses par l'intermédiaire d'un jeu de cannelures intérieures 41. Il est retenu axialement par rapport à l'arbre 30 par des anneaux élastiques 35 qui sont reçus dans des gorges complémentaires de l'arbre 30. Le moyeu comporte une série d'évidements 42 à gauche et à droite dans sa périphérie, destinés à transmettre le couple de synchronisation ou d'entraînement au moyen de couplage.

Le pignon 20 est constitué d'un fût 21 guide du pignon sur l'arbre, d'une denture extérieure 22 d'engrènement avec un autre pignon fixe porté par un autre arbre ( non représenté) et de cannelures 23 de liaison avec les moyens de couplage.

Le moyen de couplage 100 est constitué d'un anneau supérieur 110, de deux anneaux intermédiaires 120 et 130, et d'un anneau inférieur 140. L'anneau supérieur 110 comporte un cône femelle 111 coopérant avec un cône mâle 121 du premier anneau intermédiaire 120, des évidements 112 de forme cylindrique ou quelconque coopérant avec un même nombre d'ergots 131 du deuxième anneau intermédiaire 130 et destinés à assurer le couplage des anneaux 110 et 130. Les faces de contact des ergots 131 dans les évidements 112 sont parallèles à l'axe de l'arbre 30. L'anneau supérieur possède dans sa partie centrale des cannelures 113 de liaison avec le pignon 20, elles transmettent la totalité du couple transitant dans le dispositif.

L'anneau de couplage intermédiaire 120 possède un deuxième cône femelle 122 en regard du cône mâle 132 du deuxième anneau intermédiaire 130 ,et des ergots 123 pénétrant dans les évidements 141 de l'anneau inférieur 140. L'anneau 130, comme dit précédemment, a une sur face conique mâle extérieure 132 en vis-à-vis de la surface conique femelle 122 de l'anneau intermédiaire 120, des ergots 131 pénétrant dans les évidements 112 de l'anneau supérieur 110 et une surface conique femelle intérieure 133 en vis-à-vis de la surface conique extérieure mâle 142 de l'anneau inférieur 140.

Enfin, l'anneau inférieur 140, comme dit précédemment, possède dans sa périphérie des évidements 141 de couplage avec le premier anneau intermédiaire 120 dont les faces de contact sont parallèles à l'axe de l'arbre 30, un cône mâle 142 en vis-à-vis du cône femelle 133 de l'anneau intermédiaire 130. Il est également pourvu de rampes 143 qui coopèrent avec les rampes conjuguées 42 du moyeu 40. Ces rampes sont inclinées par rapport à l'axe de l'arbre 30, de manière à produire une poussée axiale induite de serrage des cônes sous l'effet de la force de contact des rampes proportionnelle au couple transmis. L'anneau inférieur présente une série d'évidements 144 dans lesquels viennent se loger des ergots de la plaque d'appui 151, par exemple en tôle, de la butée à aiguilles 150. Le pignon fou 20 appuie latéralement sur la butée à aiguilles 150 du côté opposé au moyeu 40.

Une rondelle ondulée flexible formant ressort 160, intercalée entre l'anneau inférieur 140 et la tête 151, écarte les anneaux inférieur et supérieur l'un de l'autre, quand le dispositif de couplage est au repos, afin de le rendre, totalement « ouvert », dans cet état, et de restreindre au minimum sa traînée résiduelle.

Le dispositif décrit de façon non limitative sur les figures comprend donc quatre anneaux couplés deux par deux, qui participent en parallèle à la transmission du couple

La disposition retenue de cônes inversés, dont le petit diamètre est du coté du pignon, permet d'installer un maximum de capacité en couple dans un encombrement radial donné.

La mise en service du dispositif de couplage est réalisé par le déplacement axial des anneaux et la mise en contact des surfaces coniques en vis-à-vis à l'aide d'un baladeur 170 de type roulement à billes ou à rouleaux dont le déplacement axial est obtenu par la mouvement axial d'une fourchette 180. Cette fourchette est mise en mouvement par un dispositif de commande qui la met en liaison avec des moyens de poussée quelconque (non représentés). Durant toute la phase de synchronisation et ensuite pendant la transmission du couple moteur, la poussée du baladeur doit être maintenue. C'est pourquoi le baladeur est du type roulement. Pour remettre au repos le dispositif il suffit d'annuler la poussée axiale du baladeur. Le dispositif de répulsion prend le relais pour le rendre amorphe.

## Revendications

1. Dispositif de couplage d'un pignon fou (20) avec un arbre (30) de boîte de vitesses comportant un moyeu (40) fixé sur ledit arbre, un baladeur (170) libre en rotation sur le moyeu 40), des moyens de couplage (110, 120, 130, 140) disposés entre le baladeur (170) et le pignon 20) propres à égaliser par frottement les vitesses de l'arbre (30) et du pignon (20) et à transformer le mouvement de rotation reçu du moyeu (40) en poussée axiale sur le pignon (20) de façon à transmettre eux-mêmes par friction le couple entre le moyeu et le pignon, **caractérisé en ce que** les moyens de couplage sont constitués par un ensemble de synchronisation multi-cônes (110, 120, 130, 140), dont l'anneau inférieur (140) est solidaire en rotation du moyeu, (40), et dont l'anneau supérieur (110) est solidaire en rotation du pignon (20).

2. Dispositif de couplage selon la revendication 1, **caractérisé en ce qu'**il comporte des moyens d'écartement (160) mutuel des anneaux de synchronisation (110, 140) au repos

3. Dispositif de couplage selon la revendication 1, **caractérisé en ce que en ce que** les anneaux inférieur (140) et supérieur 110 sont repoussés mutuellement par une rondelle élastique (160) formant ressort.

4. Dispositif de couplage selon la revendication 1 ou 2, caractérisé ce qu'il comporte des moyens de roulement (150) facilitant la rotation relative des anneaux inférieur et supérieur 140, 110).

5. Dispositif de couplage selon la revendication 4, **caractérisé en ce que** les moyens de roulement (150) sont constitués par une butée circulaire à aiguilles.

6. Dispositif de couplage selon la revendication 5, **caractérisé en ce que** la surface d'appui des aiguilles (150) côté moyeu, est constituée d'une plaque (151) comportant des ergots (151a) qui pénètrent dans des évidements (144) de l'anneau inférieur (140).

7. Dispositif de couplage selon la revendication 6, **caractérisé en ce que** la rondelle élastique (160) est intercalée entre l'anneau inférieur (140) et tôle (151).

8. Dispositif de couplage selon l'une des revendications précédentes, **caractérisé en ce que** les anneaux extérieurs (110, 140) présentent des évidements (112, 122) recevant des ergots (131, 123) des anneaux intermédiaires (130, 120).

9. Dispositif de couplage selon l'une des revendications 5 à 8, **caractérisé en ce que** le pignon fou (20) appuie latéralement sur la butée à aiguilles (150) du côté opposé au moyeu (40).

## Patentansprüche

1. Kupplungsvorrichtung eines beweglichen Ritzels (20) mit einer Welle (30) eines Getriebes, aufweisend eine Nabe (40), die an der Welle befestigt ist, eine Schiebewelle (170), die auf der Nabe frei drehbar ist, Kupplungsmittel (110, 120,130,140), welche zwischen der Schiebewelle (170) und dem Ritzel (20) angeordnet sind, die fähig sind, die Geschwindigkeiten der Welle (30) und des Ritzels (20) durch Reibung gleichzusetzen, und die Drehbewegung, welche von der Nabe (40) unter Axialdruck an dem Ritzel (20) empfangen wird, in einer Weise umzuwandeln, um selbst durch Reibung das Moment zwischen der Nabe und dem Ritzel zu übertragen,
**dadurch gekennzeichnet, dass**
die Kupplungsmittel durch eine Mehrfach-Konus-Gesamtheit (110, 120, 130, 140) gebildet sind, von denen der untere Ring (140) fest in Drehung mit der Nabe (40) verbunden ist, und von denen der obere Ring (110) fest in Drehung mit dem Ritzel (20) verbunden ist.

2. Kupplungsvorrichtung gemäß Anspruch 1, **dadurch gekennzeichnet, dass** sie gegenseitige Distanzmittel (160) der Synchronisierringe (110, 140) in Ruhestellung aufweist.

3. Kupplungsvorrichtung gemäß Anspruch 1, **dadurch gekennzeichnet, dass** der untere Ring (140) und der obere Ring (110) gegenseitig voneinander abgestoßen werden durch eine elastische Unterlegscheibe (160), welche eine Feder bildet.

4. Kupplungsvorrichtung gemäß Anspruch 1 oder 2, **dadurch gekennzeichnet, dass** sie Lagermittel (150) aufweist, welche die relative Drehung des unteren Rings und des oberen Rings (140, 110) erleichtern.

5. Kupplungsvorrichtung gemäß Anspruch 4, **dadurch gekennzeichnet, dass** die Lagermittel (150) aus einem kreisförmigen Axiallager mit Nadeln gebildet sind.

6. Kupplungsvorrichtung gemäß Anspruch 5, **dadurch gekennzeichnet, dass** die Anlageoberfläche der Nadeln (150) auf Seiten der Nabe aus einer Platte (151) gebildet ist, welche Vorsprünge (151a) aufweist, die in Vertiefungen (144) des unteren Rings (140) eindringen.

7. Kupplungsvorrichtung gemäß Anspruch 6, **dadurch gekennzeichnet, dass** die elastische Unterlegscheibe (160) zwischen dem unteren Ring (140) und dem Blech (151) zwischengesetzt ist.

8. Kupplungsvorrichtung gemäß einem der vorherigen Ansprüche, **dadurch gekennzeichnet, dass** die äußeren Ringe (110, 140) Vertiefungen (112, 122) aufweisen, welche-Vorsprünge (131, 123) der Zwischenringe (130, 120) aufnehmen.

9. Kupplungsvorrichtung gemäß einem der Ansprüche 5 bis 8, **dadurch gekennzeichnet, dass** das bewegliche Ritzel (20) seitlich an dem Axialnadellager (150) auf der Seite, welche der Nabe (40) gegenüberliegt, anliegt.

## Claims

1. Coupling device between an idler (20) and a gearbox shaft (30) comprising a hub (40) fixed to the shaft, a sliding gear (170) rotating freely on the hub (40), couplings (110, 120, 130, 140) arranged between the sliding gear (170) and the idler (20) designed to equalise by friction the speed of the shaft (30) and the idler (20) and convert the rotation from the hub (40) into axial thrust on the idler (20) in order to transmit the torque between the hub and the idler by friction themselves, **characterised in that** the couplings are made up of a multiple-cone synchroniser unit (110, 120, 130, 140), in which the lower ring (140) is rotatably connected to the hub (40) and the upper ring (110) is rotatably connected to the idler (20).

2. Coupling device according to claim 1, **characterised in that** it comprises means of mutually separating (160) the synchroniser cones (110, 140) when idle.

3. Coupling device according to claim 1, **characterised in that** the lower (140) and upper (110) rings are mutually pushed back by an elastic washer (160) forming a spring.

4. Coupling device according to claim 1 or 2, **characterised in that** it comprises bearings (150) that facilitate the relative rotation of the lower and upper rings (140, 110).

5. Coupling device according to claim 4, **characterised in that** the bearings (150) are made up of a circular thrust needle bearing.

6. Coupling device according to claim 5, **characterised in that** the bearing surface of the needles (150) on the hub side is made up of a plate (151) comprising stubs (151a) that enter recesses (144) on the lower ring (140).

7. Coupling device according to claim 6, **characterised in that** the elastic washer (160) is inserted between the lower ring (140) and the metal sheet (151).

8. Coupling device according to any one of the previous claims, **characterised in that** the outer rings (110, 140) have recesses (112, 122) that accommodate stubs (131, 123) on the intermediate rings (130, 120).

9. Coupling device according to any one of claims 5 to 8, **characterised in that** the idler (20) is resting laterally on the needle bearing (150) on the opposite side to the hub (40).
